# EUROPEAN PATENT SPECIFICATION

(11) **EP 4 120 783 B1**
(45) Date of publication and mention of the grant of the patent: **28.10.2026**
(21) Application number: 22194683.3
(22) Date of filing: 07.05.2018
(51) Int. Cl.: H04W 72/12, H04B 7/06, H04L 5/00, H04W 88/02

(54) **METHOD FOR DETERMINING RESOURCE LOCATION, TERMINAL APPARATUS, AND NETWORK APPARATUS**
VERFAHREN ZUR RESSOURCENSTANDORTBESTIMMUNG, ENDGERÄT UND NETZWERKGERÄT
PROCÉDÉ DE DÉTERMINATION D'EMPLACEMENT DE RESSOURCE, APPAREIL TERMINAL ET APPAREIL DE RÉSEAU

(43) Date of publication of application: 18.01.2023
(62) Document number(s) of the earlier application(s) in accordance with Art. 76 EPC: 18917792.6 / 3 755 099
(73) Proprietor: GUANGDONG OPPO MOBILE TELECOMMUNICATIONS CORP., LTD., Dongguan, Guangdong 523860 (CN)
(72) Inventor: SHI, Zhihua, Dongguan, 523860 (CN)
(74) Representative: RGTH

(56) References cited:
- EP-A1- 2 903 361
- NTT DOCOMO ET AL: "Views on CSI feedback for shortened TTI with reduced processing time", vol. RAN WG1, no. Reno, USA; 20161114 - 20161118, 5 November 2016 (2016-11-05), XP051190525, Retrieved from the Internet <URL:http://www.3gpp.org/ftp/tsg_ran/WG1_RL1/TSGR1_87/Docs/> [retrieved on 20161105]

## Description

### BACKGROUND

### Technical Field

The present invention relates to the field of information processing technologies, and in particular, to a method for determining a resource location, a terminal device, a network device, and a computer storage medium.

### Related Art

Different numerologies are introduced into NR. For different numerologies, subcarrier spacings on a frequency domain are different, and time lengths of all slots on a time domain are also different. When different numerologies are used for an uplink and a downlink, counts of slots of the uplink and the downlink are different. For channel state information (CSI) reporting, reference needs to be made based on a CSI reference resource, and a location of the CSI reference resource depends on both a reporting moment and nCQI_ref (that is, a slot offset of the CSI reference resource relative to the reporting moment).

Currently, in standards, merely values of nCQI_ref under different numerologies are provided, and whether the numerology is determined based on a numerology of uplink reporting or a numerology of downlink measurement is not provided. In addition, when different numerologies are used for an uplink and a downlink, a plurality of downlink subframes may be obtained according to a reporting moment and nCQI_ref. How to determine which downlink subframe is the CSI reference resource is also a problem to be resolved.

Patent document EP 2 903 361 A1 discloses determining a subframe offset value pointing to a periodic CSI reference resource.

### SUMMARY

To resolve the foregoing technical problems, embodiments of the present invention provide methods for determining a resource location by a terminal device and by a network device, a terminal device, and a network device, according to independent claims 1, 3, 5, 7, respectively. Further embodiments are the subject-matter of the dependent claims.

In technical solutions in the embodiments of the present invention, a terminal device can be enabled to obtain a value of a slot offset of a CSI reference resource relative to a reporting moment by using downlink measurement resource configuration and uplink reporting resource configuration that are included in CSI reporting configuration information, and further determine a location of the CSI reference resource on a time domain based on the slot offset. In this way, accuracy of calculation for CSI is ensured, and system processing efficiency is improved.

### BRIEF DESCRIPTION OF THE DRAWINGS

FIG. 1 is a schematic flowchart of a method for determining a resource location according to an embodiment of the present invention;
FIG. 2 is a schematic structural composition diagram of a terminal device according to an embodiment of the present invention; and
FIG. 3 is a schematic diagram of a hardware architecture according to an embodiment of the present invention.

### DETAILED DESCRIPTION

To make the features and technical content of the embodiments of the present invention more comprehensible, the following describes implementations of the embodiments of the present invention in detail with reference to the accompanying drawings. The accompanying drawings are intended only for reference, and not intended to limit the embodiments of the present invention.

### Embodiment 1

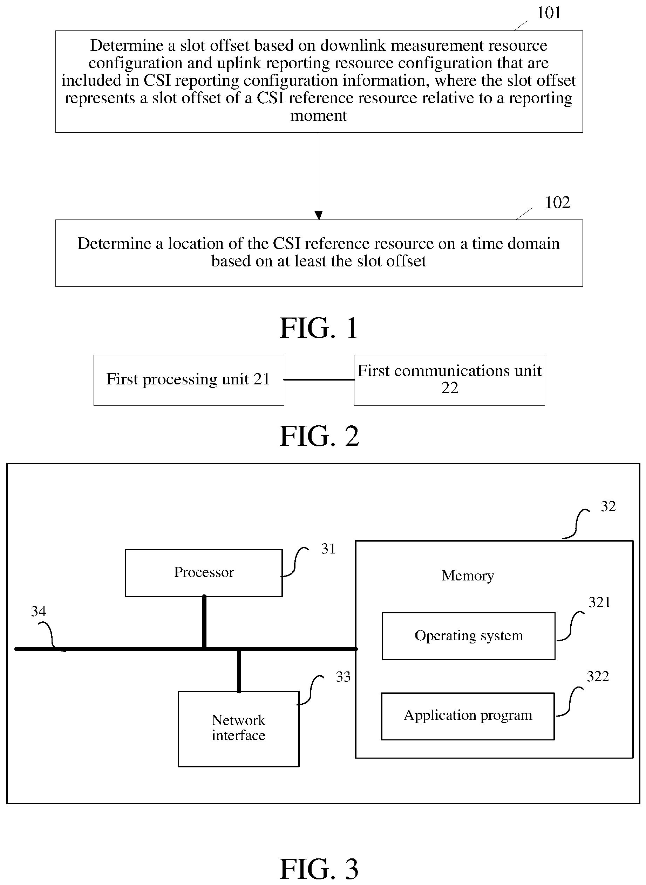

This embodiment of the present invention provides a method for determining a resource location, where the method is applied to a terminal device and as shown in FIG. 1, includes:
Step 101: Determine a slot offset based on downlink measurement resource configuration and uplink reporting resource configuration that are included in CSI reporting configuration information, where the slot offset represents a slot offset of a CSI reference resource relative to a reporting moment.

Step 102: Determine a location of the CSI reference resource on a time domain based on at least the slot offset.

In the claimed invention, the slot offset is determined based on the downlink measurement resource configuration (Manner 2 below) and the location is determined according to Scenario 2 below in combination with the formula of Embodiments 8 and 9.

Before step 101 is performed, the method further includes:
receiving first information sent by a network side; and obtaining at least one piece of CSI reporting configuration information based on the first information.

Specifically, the CSI reporting configuration information further includes: CSI reporting being at least one of the following: periodic reporting, quasi-periodic reporting, and aperiodic reporting.

The downlink measurement resource configuration included in the CSI reporting configuration information includes: configuration of a measurement resource corresponding to CSI reporting.

The uplink reporting resource configuration included in the CSI reporting configuration information includes: PUCCH resource configuration during reporting and/or PUSCH resource configuration during reporting.

It should be noted that the PUCCH resource configuration may be a subcarrier spacing when reporting is performed by using a PUCCH; and the PUSCH resource configuration may be a subcarrier spacing when reporting is performed by using a PUSCH. Certainly, the PUCCH or PUSCH resource configuration may further include other parameters, but the parameters are not further exhaustively listed in this embodiment.

In the foregoing step 101, the determining a slot offset based on downlink measurement resource configuration and uplink reporting resource configuration that are included in CSI reporting configuration information may include the following several specific processing manners.

Manner 1: When CSI reporting is periodic reporting or quasi-periodic reporting, the slot offset of the CSI reference resource relative to the reporting moment is determined based on resource configuration during PUCCH or PUSCH reporting. Manner 1 is not covered by the claimed invention.

Specifically, during periodic reporting or quasi-periodic reporting, a value of nCQI_ref (the slot offset of the CSI reference resource relative to the reporting moment) is obtained through table lookup by using a subcarrier spacing in the resource configuration during PUCCH or PUSCH reporting.

A table corresponding to the table lookup operation may be a first table corresponding to a preset subcarrier spacing and a preset slot offset.

It should be noted that, for the manner of determining, based on resource configuration during PUCCH or PUSCH reporting, the slot offset of the CSI reference resource relative to the reporting moment, apart from the table lookup described above, there may further be other processing methods. For example, the slot offset may be determined by using a preset correspondence. For example, it is preset that a subcarrier spacing 1 corresponding to the PUCCH or the PUSCH corresponds to a slot offset 1, and a subcarrier spacing 2 corresponds to a slot offset 2. In addition, calculation may alternatively be performed based on a preset calculation formula. For example, a calculation formula is specified according to a correspondence between a subcarrier spacing and a slot offset, and the slot offset may be obtained by performing calculation on different subcarrier spacings and corresponding parameters, where the specified calculation formula may be specified according to an actual case.

Manner 2: When CSI reporting is periodic reporting or quasi-periodic reporting, the slot offset of the CSI reference resource relative to the reporting moment is determined based on resource configuration of a downlink measurement resource corresponding to the CSI reporting configuration information.

Specifically, during periodic reporting or quasi-periodic reporting, a value of nCQI_ref is obtained through table lookup by using a subcarrier spacing of the downlink measurement resource corresponding to the CSI reporting.

In other words, in this manner, the resource configuration of the downlink measurement resource may further include: the subcarrier spacing.

Likewise, a processing manner for table lookup in this manner may also be replaced. Specific replacement processing is the same as that in Manner 1, and details are not described herein again.

Manner 3: When CSI reporting is periodic reporting or quasi-periodic reporting, the slot offset of the CSI reference resource relative to the reporting moment is determined based on resource configuration during PUCCH or PUSCH reporting and resource configuration during downlink measurement corresponding to the CSI reporting configuration information. Manner 3 is not covered by the claimed invention.

Specifically, when CSI reporting is periodic reporting or quasi-periodic reporting, the slot offset of the CSI reference resource relative to the reporting moment is obtained based on a smallest or largest subcarrier spacing in the resource configuration during PUCCH or PUSCH reporting and resource configuration during downlink measurement corresponding to the CSI reporting configuration information.

For example, a value of nCQI_ref may be obtained through table lookup by using the smallest or largest subcarrier spacing of the downlink measurement resource corresponding to the CSI reporting during PUCCH or PUSCH reporting. Likewise, a processing manner for table lookup in this manner may also be replaced. Specific replacement processing is the same as that in Manner 1, and details are not described herein again.

Manner 4: When CSI reporting is aperiodic reporting, the slot offset of the CSI reference resource relative to the reporting moment is obtained according to a CSI calculation time. Manner 4 is not covered by the claimed invention.

For example, if reporting is performed by using a PUSCH (or a PUCCH), when aperiodic CSI is reported by using the PUSCH, a value of nCQI_ref is obtained by using Z' (that is, a calculation time of the CSI for the aperiodic CSI reporting).

Z' may be represented by a quantity of symbols required by a terminal from a last symbol of a CSI-RS or CSI-IM whose time-domain starting position is later and which is used to measure the CSI to the PUSCH reporting.

Manner 5: When the network side is notified, by using a terminal reporting capability, of a value of a slot offset that can be supported by the terminal device, the slot offset of the CSI reference resource relative to the reporting moment is determined based on one of the following processing manners:
when CSI reporting is periodic reporting or quasi-periodic reporting, obtaining, by using a subcarrier spacing during PUCCH or PUSCH reporting, the slot offset of the CSI reference resource relative to the reporting moment;
when CSI reporting is periodic reporting or quasi-periodic reporting, obtaining, by using a subcarrier spacing of a downlink measurement resource corresponding to the CSI reporting configuration information, the slot offset of the CSI reference resource relative to the reporting moment; and
when CSI reporting is periodic reporting or quasi-periodic reporting, obtaining, based on a smallest subcarrier spacing of resource configuration during PUCCH or PUSCH reporting and resource configuration during downlink measurement corresponding to the CSI reporting configuration information, the slot offset of the CSI reference resource relative to the reporting moment.

Specifically, a base station may be notified, by using a terminal reporting capability, of a value of nCQI_ref that can be supported by a user. A terminal obtains the value of nCQI_ref through table lookup according to any one of the foregoing Manner 1, Manner 2, and Manner 3. Among the suboptions of Manner 5, only the second suboption (subcarrier spacing of the downlink measurement resource) is covered by the claimed invention.

Likewise, a processing manner for table lookup in this manner may also be replaced. Specific replacement processing is the same as that in Manner 1, and details are not described herein again.

Based on the descriptions of the foregoing solutions, for the determining a location of the CSI reference resource on a time domain based on at least the slot offset in step 102, that is, determining, by a terminal, the location of the CSI reference resource on the time domain according to a slot n (first uplink slot) and nCQI_ref at PUCCH reporting moment or PUSCH reporting moment, a plurality of processing scenarios in the following may also be included.

Scenario 1: The slot offset is subtracted from the first uplink slot at the PUCCH reporting moment or PUSCH reporting moment to obtain a second uplink slot, and use a first downlink slot corresponding to the second uplink slot as the location of the CSI reference resource on the time domain. This scenario is not covered by the claimed invention.

Specifically, when the slot offset is obtained by performing processing in the foregoing Manner 1, a slot at which nCQI_ref before the slot n (first uplink slot) is located, that is, n-nCQI_ref, is first obtained, and then a downlink slot corresponding to the uplink slot is obtained.

Further, an earliest first downlink slot is selected as the location of the CSI reference resource on the time domain when there are at least two first downlink slots corresponding to the first uplink slot. In other words, an earliest slot is selected as the time domain location of the CSI reference resource when there are a plurality of first downlink slots corresponding to the uplink slot.

Alternatively, an earliest valid first downlink slot is selected as the location of the CSI reference resource on the time domain when there are at least two first downlink slots corresponding to the first uplink slot. In other words, an earliest valid downlink slot is selected as the time domain location of the CSI reference resource when there are a plurality of such first downlink slots corresponding to the uplink slot.

Alternatively, a latest first downlink slot is selected as the location of the CSI reference resource on the time domain when there are at least two first downlink slots corresponding to the first uplink slot.

In other words, a latest slot is selected as the time domain location of the CSI reference resource when there are a plurality of such first downlink slots corresponding to the first uplink slot.

Alternatively, a latest valid first downlink slot is selected as the location of the CSI reference resource on the time domain when there are at least two first downlink slots corresponding to the first uplink slot.

In other words, a latest valid downlink slot is selected as the time domain location of the CSI reference resource when there are a plurality of such first downlink slots corresponding to the first uplink slot.

Alternatively, the location of the CSI reference resource on the time domain is determined based on the first uplink slot and the slot offset when there are at least two first downlink slots corresponding to the first uplink slot.

In other words, when there are a plurality of such first downlink slots corresponding to the first uplink slot, a calculation formula, the first uplink slot, and the slot offset may be preset, to calculate and obtain the location of the CSI reference resource on the time domain.

Alternatively, when there are at least two first downlink slots corresponding to the first uplink slot, a corresponding downlink slot is selected as a location of a CSI reference resource of at least two bandwidth parts BWP on the time domain based on at least one of the following manners:
selecting an earliest first downlink slot as the location of the CSI reference resource on the time domain;
selecting an earliest valid first downlink slot as the location of the CSI reference resource on the time domain;
selecting a latest first downlink slot as the location of the CSI reference resource on the time domain; and
selecting a latest valid first downlink slot as the location of the CSI reference resource on the time domain.

In other words, when there are a plurality of downlink slots corresponding to the uplink slot, a corresponding downlink slot is selected as the time domain location of the CSI reference resource respectively according to the four manners described above. It should be noted that at least one of the four manners described above may be used.

Scenario 2: A second downlink slot corresponding to a first uplink slot at PUCCH reporting moment or PUSCH reporting moment is determined; and the slot offset is subtracted from the second downlink slot, where an obtained third downlink slot is the location of the CSI reference resource on the time domain

In other words, when the slot offset is obtained in the foregoing Manner 2, a downlink slot n' (second downlink slot) corresponding to the slot n (first uplink slot) is first obtained, and a slot at which nCQI_ref before the downlink slot n' (second downlink slot) is located, that is, n'-nCQI_ref, is selected as the time domain location of the CSI reference resource.

Further, a foremost second downlink slot is selected for calculating the third downlink slot when there are at least two second downlink slots corresponding to the first uplink slot.

In other words, a foremost downlink slot n' is selected for calculating the CSI reference resource when there are a plurality of downlink slots n' (second downlink slots) corresponding to the uplink slot n (first uplink slot).

Alternatively, a last second downlink slot is selected for calculating the third downlink slot when there are at least two second downlink slots corresponding to the first uplink slot.

In other words, a last downlink slot n' is selected for calculating the third downlink slot, to determine the CSI reference resource, when there are a plurality of downlink slots n' (second downlink slots) corresponding to the uplink slot n (first uplink slot).

Alternatively, the location of the CSI reference resource on the time domain is determined based on the first uplink slot and the slot offset when there are at least two second downlink slots corresponding to the first uplink slot. In other words, a preset calculation formula may be used to perform calculation when there are a plurality of second downlink slots corresponding to the first uplink slot.

Scenario 3: A subcarrier spacing corresponding to the slot offset is determined to be a downlink subcarrier spacing or an uplink subcarrier spacing, and if the subcarrier spacing is a downlink subcarrier spacing, the location of the CSI reference resource on the time domain is calculated based on one of the following manners (Scenario 3 is not covered by the claimed invention):
determining the location of the CSI reference resource on the time domain based on the first uplink slot and the slot offset;
selecting an earliest first downlink slot as the location of the CSI reference resource on the time domain;
selecting an earliest valid first downlink slot as the location of the CSI reference resource on the time domain;
selecting a latest first downlink slot as the location of the CSI reference resource on the time domain; and
selecting a latest valid first downlink slot as the location of the CSI reference resource on the time domain.

In other words, when the slot offset is obtained through calculation based on the foregoing Manner 3, a subcarrier spacing corresponding to nCQI_ref is first determined to be a downlink subcarrier spacing or an uplink subcarrier spacing, and if the subcarrier spacing is a downlink subcarrier spacing, the time domain location of the CSI reference resource is calculated according to at least one of the several methods described above.

In addition, the subcarrier spacing corresponding to the slot offset is determined to be a downlink subcarrier spacing or an uplink subcarrier spacing, and if the subcarrier spacing is an uplink subcarrier spacing, an earliest first downlink slot is selected as the location of the CSI reference resource on the time domain. In other words, if the subcarrier spacing corresponding to the slot offset is an uplink subcarrier spacing, the time domain location of the CSI reference resource is calculated according to the method in which the earliest first downlink slot is selected as the location of the CSI reference resource on the time domain.

Finally, after step 102 is completed, CSI is calculated according to a determined time domain location of the CSI reference resource, and reporting is performed by using a PUCCH or PUSCH resource.

It can be learned that in the solution described above, a value of a slot offset of a CSI reference resource relative to a reporting moment can be obtained by using downlink measurement resource configuration and uplink reporting resource configuration that are included in CSI reporting configuration information, and further, a location of the CSI reference resource on a time domain is determined based on the slot offset. In this way, accuracy of calculation for CSI is ensured, and system processing efficiency is improved.

### Embodiment 2

This embodiment of the present invention provides a method for determining a resource location, where the method is applied to a network device and includes: sending at least one piece of first information to a terminal device, where the first information carries at least CSI reporting configuration information, and the CSI reporting configuration information includes at least downlink measurement resource configuration and uplink reporting resource configuration.

Specifically, the CSI reporting configuration information further includes: CSI reporting being at least one of the following: periodic reporting, quasi-periodic reporting, and aperiodic reporting.

The downlink measurement resource configuration included in the CSI reporting configuration information includes: configuration of a measurement resource corresponding to CSI reporting.

The uplink reporting resource configuration included in the CSI reporting configuration information includes: PUCCH resource configuration during reporting and/or PUSCH resource configuration during reporting.

It should be noted that the PUCCH resource configuration may be a subcarrier spacing when reporting is performed by using a PUCCH; and the PUSCH resource configuration may be a subcarrier spacing when reporting is performed by using a PUSCH. Certainly, the PUCCH or PUSCH resource configuration may further include other parameters, but the parameters are not further exhaustively listed in this embodiment.

Correspondingly, on a terminal device side, a slot offset may be determined based on the downlink measurement resource configuration and the uplink reporting resource configuration that are included in the CSI reporting configuration information, and further, a location of a CSI reference resource on a time domain is determined based on at least the slot offset. That is, a terminal determines the location of the CSI reference resource on the time domain according to a slot n (first uplink slot) and nCQI_ref at PUCCH reporting moment or PUSCH reporting moment, calculates CSI according to a determined time domain location of the CSI reference resource, and performs reporting by using a PUCCH or PUSCH resource.

It can be learned that in the solution described above, the terminal device can be enabled to obtain a value of a slot offset of a CSI reference resource relative to a reporting moment by using downlink measurement resource configuration and uplink reporting resource configuration that are included in CSI reporting configuration information, and further determine a location of the CSI reference resource on a time domain based on the slot offset. In this way, accuracy of calculation for CSI is ensured, and system processing efficiency is improved. In the claimed invention, the slot offset is determined based on the downlink measurement resource configuration (Manner 2 above) and the location is determined according to Scenario 2 above in combination with the formula of Embodiments 8 and 9.

### Embodiment 3 (not covered by the claimed invention)

Based on the foregoing embodiments, this embodiment further provides descriptions of a specific processing scenario with reference to Table 1. When there are different numerologies, and CSI reporting includes/does not include CRI, a slot is used as a unit of a value of nCQI_ref (slot offset).

When an uplink subcarrier spacing is 15 KHz, and a downlink subcarrier spacing is 60 KHz, the value of nCQI_ref (slot offset) may be determined based on Manner 1 in Embodiment 1. That is, the value of nCQI_ref (slot offset) is determined to be 4 or 5 based on the uplink subcarrier spacing of 15 KHz.

**Table 1**

| nCQI_ref (Slots) | 15 KHz | 30 KHZ | 60 KHZ | 120 KHz |
|---|---|---|---|---|
| No CRI | 4 | 8 | 16 | 32 |
| CRI | 5 | 10 | 20 | 40 |

### Embodiment 4 (not covered by the claimed invention)

Based on the foregoing embodiments, this embodiment further provides descriptions of a specific processing scenario with reference to Table 2. When CSI reporting includes/does not include CRI, ms is used as a unit of a value of nCQI_ref (slot offset).

When CSI reporting does not include CRI, an uplink subcarrier spacing is 15 KHz, and a downlink subcarrier spacing is 60 KHz, in this case, the value of nCQI_ref (slot offset) may be determined based on Manner 1 in Embodiment 1. A slot offset that does not include CRI is first obtained to be 4 ms, then according to 1 ms including 4 slots, nCQI_ref is obtained to be 4 slots, where 1 ms including 4 slots is obtained based on the uplink subcarrier spacing.

**Table 2**

| nCQI_ref (ms) | |
|---|---|
| No CRI | 4 |
| CRI | 5 |

### Embodiment 5 (not covered by the claimed invention)

Based on the foregoing embodiments, this embodiment further provides descriptions of a specific processing scenario with reference to Table 3. When CSI reporting includes/does not include CRI, ms is used as a unit of a value of nCQI_ref (slot offset).

When CSI reporting does not include CRI, an uplink subcarrier spacing is 30 KHz, and a downlink subcarrier spacing is 60 KHz, in this case, the value of nCQI_ref (slot offset) may be determined based on Manner 1 in Embodiment 1. A slot offset that does not include CRI is first obtained to be 4 ms, then according to 1 ms including 4 slots, nCQI_ref is obtained to be 16 slots, where 1 ms including 4 slots is obtained based on the downlink subcarrier spacing.

**Table 3**

| nCQI_ref (ms) | |
|---|---|
| No CRI | 4 |
| CRI | 5 |

### Embodiment 6 (not covered by the claimed invention)

Description is performed with reference to Table 4. An uplink subcarrier spacing is 15 KHz, a downlink subcarrier spacing is 60 KHz, and it is assumed that a slot of CSI for uplink reporting is a slot 5.

nCQI_ref (slot offset) is obtained based on the uplink subcarrier spacing, and a value thereof is set to 4. In the case, according to Scenario 1 in the foregoing embodiment, 4 is subtracted from 5 to obtain 1, and 1, used as a corresponding second uplink slot, is an uplink slot 1.

In Table 4, first downlink slots corresponding to the uplink slot 1 are slots 1, 2, 3, and 4. In this case, according to the principle that an earliest first downlink slot is selected as a location of a CSI reference resource on a time domain when there are at least two first downlink slots corresponding to the first uplink slot, the slot 1 is selected as a slot at which a downlink CSI reference resource is located.

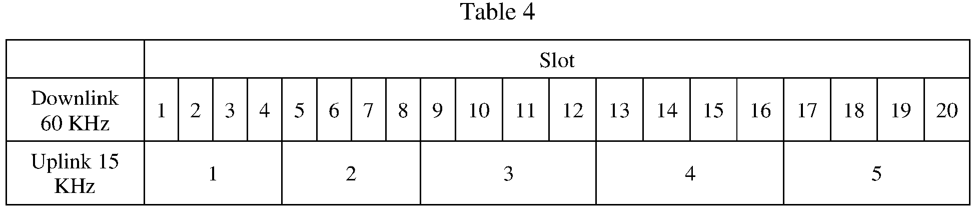

It should be noted that in this embodiment, although processing is performed by using an earliest first downlink slot as the location of the CSI reference resource on the time domain as a principle, in actual processing, a processing principle in which an earliest valid first downlink slot, a latest first downlink slot, or a latest valid first downlink slot is selected as the location of the CSI reference resource on the time domain may alternatively be used.

For example, with reference to the foregoing table, a latest first downlink slot is selected, then a slot 4 may be selected. In addition, assuming that the slot 1 is invalid, the slot 2 is valid, the slot 3 is valid, and the slot 4 is invalid, if an earliest valid first downlink slot is selected, a slot that is finally selected may be the slot 2; and if a latest valid first downlink slot is selected, a slot that is finally selected may be the slot 3.

### Embodiment 7 (not covered by the claimed invention)

Description is performed with reference to Table 5. It is assumed that an uplink subcarrier spacing is 15 KHz, a downlink subcarrier spacing is 60 KHz, and a slot of CSI for uplink reporting is a slot 5.

nCQI_ref (slot offset) is obtained based on the uplink subcarrier spacing. In this case, a slot at which a CSI reference resource is located may also be obtained according to the following calculation manner $\left⌊\left(n-{n}_{CQI _ ref}\right).\frac{{2}^{{μ}_{1}}}{{2}^{{μ}_{2}}}\right⌋$, where *µ*₁ may be a *µ* value corresponding to a subcarrier spacing of a measurement resource or another resource related to downlink measurement, and *µ*₂ may be a *µ* value corresponding to a subcarrier spacing of a reported PUCCH or PUSCH resource. It should be further noted that the calculation formula may be rounding up or may be rounding down.

In this case, the slot at which a CSI reference resource is located may be calculated to be 4.

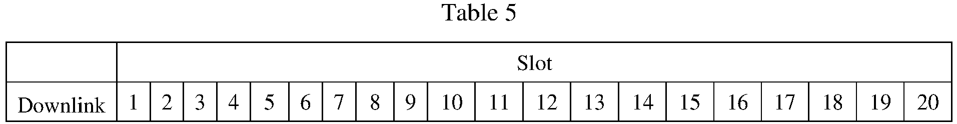

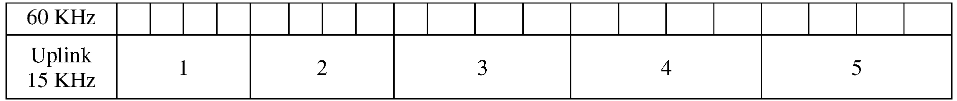

### Embodiment 8

Referring to Table 6, it is assumed that a downlink subcarrier spacing is 15 KHz, an uplink subcarrier spacing is 60 KHz, and a slot of CSI for uplink reporting is a slot 18.

nCQI_ref (slot offset) is obtained based on the subcarrier spacing of a downlink measurement resource, and a value thereof is set to 4. In this case, a slot at which a CSI reference resource is located may also be obtained according to the following calculation manner $\left⌊n.\frac{{2}^{{μ}_{1}}}{{2}^{{μ}_{2}}}\right⌋ - {n}_{CQI _ ref}$*,* where *µ*₁ is a *µ* value corresponding to a subcarrier spacing of a measurement resource or another resource related to downlink measurement, and *µ*₂ is a *µ* value corresponding to a subcarrier spacing of a reported PUCCH or PUSCH resource. It should be noted that the foregoing formula may be rounding up, or may be rounding down.

In this case, the slot at which a CSI reference resource is located may be calculated to be 0 (1 during rounding up).

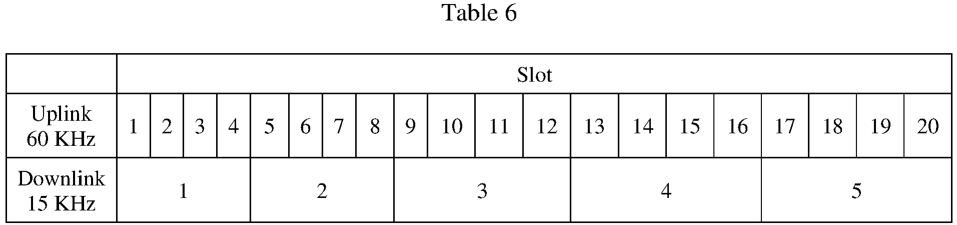

### Embodiment 9

Referring to Table 7, an uplink subcarrier spacing is 15 KHz, a downlink subcarrier spacing is 60 KHz, and it is assumed that a slot of CSI for uplink reporting is a slot 5.

nCQI_ref (slot offset) is obtained based on the subcarrier spacing of a downlink measurement resource, and a value thereof is set to 16. In this case, a slot at which a CSI reference resource is located may be obtained according to the following calculation manner $\left⌊n.\frac{{2}^{{μ}_{1}}}{{2}^{{μ}_{2}}}\right⌋ - {n}_{CQI _ ref}$*,* where *µ*₁ is a *µ* value corresponding to a subcarrier spacing of a measurement resource or another resource related to downlink measurement, and *µ*₂ is a *µ* value corresponding to a subcarrier spacing of a reported PUCCH or PUSCH resource. Likewise, the foregoing formula may be rounding up, or may be rounding down.

In this case, the slot at which a CSI reference resource is located may be calculated to be 4 (also 4 during rounding up).

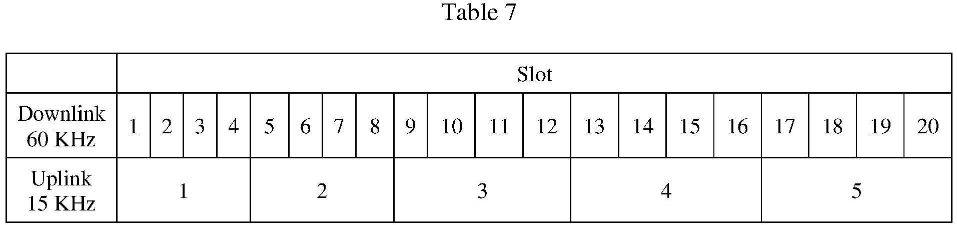

### Embodiment 10

This embodiment of the present invention provides a terminal device, as shown in FIG. 2, including:
a first processing unit 21, configured to determine a slot offset based on downlink measurement resource configuration and uplink reporting resource configuration that are included in CSI reporting configuration information, where the slot offset represents a slot offset of a CSI reference resource relative to a reporting moment; and determine a location of the CSI reference resource on a time domain based on at least the slot offset.

The terminal device further includes:
a first communications unit 22, configured to receive first information sent by a network side.

Correspondingly, the first processing unit 21 is configured to obtain at least one piece of CSI reporting configuration information based on the first information.

Specifically, the CSI reporting configuration information further includes: CSI reporting being at least one of the following: periodic reporting, quasi-periodic reporting, and aperiodic reporting.

The downlink measurement resource configuration included in the CSI reporting configuration information includes: configuration of a measurement resource corresponding to CSI reporting.

The uplink reporting resource configuration included in the CSI reporting configuration information includes: PUCCH resource configuration during reporting and/or PUSCH resource configuration during reporting.

It should be noted that the PUCCH resource configuration may be a subcarrier spacing when reporting is performed by using a PUCCH; and the PUSCH resource configuration may be a subcarrier spacing when reporting is performed by using a PUSCH. Certainly, the PUCCH or PUSCH resource configuration may further include other parameters, but the parameters are not further exhaustively listed in this embodiment.

The determining a slot offset based on downlink measurement resource configuration and uplink reporting resource configuration that are included in CSI reporting configuration information may include the following several specific processing manners:
Manner 1 (not covered by the claimed invention):
The first processing unit 21 is configured to: when CSI reporting is periodic reporting or quasi-periodic reporting, determine, based on resource configuration during PUCCH or PUSCH reporting, the slot offset of the CSI reference resource relative to the reporting moment.

Specifically, during periodic reporting or quasi-periodic reporting, a value of nCQI_ref (the slot offset of the CSI reference resource relative to the reporting moment) is obtained through table lookup by using a subcarrier spacing in the resource configuration during PUCCH or PUSCH reporting.

A table corresponding to the table lookup operation may be a first table corresponding to a preset subcarrier spacing and a preset slot offset.

It should be noted that, for the manner of determining, based on resource configuration during PUCCH or PUSCH reporting, the slot offset of the CSI reference resource relative to the reporting moment, apart from the table lookup described above, there may further be other processing methods. For example, the slot offset may be determined by using a preset correspondence. For example, it is preset that a subcarrier spacing 1 corresponding to the PUCCH or the PUSCH corresponds to a slot offset 1, and a subcarrier spacing 2 corresponds to a slot offset 2. In addition, calculation may alternatively be performed based on a preset calculation formula. For example, a calculation formula is specified according to a correspondence between a subcarrier spacing and a slot offset, and the slot offset may be obtained by performing calculation on different subcarrier spacings and corresponding parameters, where the specified calculation formula may be specified according to an actual case.

Manner 2: The first processing unit 21 is configured to: when CSI reporting is periodic reporting or quasi-periodic reporting, determine, based on resource configuration of a downlink measurement resource corresponding to the CSI reporting configuration information, the slot offset of the CSI reference resource relative to the reporting moment.

Specifically, during periodic reporting or quasi-periodic reporting, a value of nCQI_ref is obtained through table lookup by using a subcarrier spacing of the downlink measurement resource corresponding to the CSI reporting.

In other words, in this manner, the resource configuration of the downlink measurement resource may further include: the subcarrier spacing.

Likewise, a processing manner for table lookup in this manner may also be replaced. Specific replacement processing is the same as that in Manner 1, and details are not described herein again.

### Manner 3 (not covered by the claimed invention):

The first processing unit 21 is configured to: when CSI reporting is periodic reporting or quasi-periodic reporting, determine, based on resource configuration during PUCCH or PUSCH reporting and resource configuration during downlink measurement corresponding to the CSI reporting configuration information, the slot offset of the CSI reference resource relative to the reporting moment.

Specifically, when CSI reporting is periodic reporting or quasi-periodic reporting, the slot offset of the CSI reference resource relative to the reporting moment is obtained based on a smallest or largest subcarrier spacing in the resource configuration during PUCCH or PUSCH reporting and resource configuration during downlink measurement corresponding to the CSI reporting configuration information.

For example, a value of nCQI_ref may be obtained through table lookup by using the smallest or largest subcarrier spacing of the downlink measurement resource corresponding to the CSI reporting during PUCCH or PUSCH reporting. Likewise, a processing manner for table lookup in this manner may also be replaced. Specific replacement processing is the same as that in Manner 1, and details are not described herein again.

### Manner 4 (not covered by the claimed invention):

The first processing unit 21 is configured to: when CSI reporting is aperiodic reporting, obtain, according to a CSI calculation time, the slot offset of the CSI reference resource relative to the reporting moment.

For example, if reporting is performed by using a PUSCH (or a PUCCH), when aperiodic CSI is reported by using the PUSCH, a value of nCQI_ref is obtained by using Z' (that is, a calculation time of the CSI for the aperiodic CSI reporting).

Z' may be represented by a quantity of symbols required by a terminal from a last symbol of a CSI-RS or CSI-IM whose time-domain starting position is later and which is used to measure the CSI to the PUSCH reporting.

### Manner 5 (Among the suboptions of Manner 5, only the second suboption (subcarrier spacing of the downlink measurement resource) is covered by the claimed invention):

The first processing unit 21 is configured to: when the network side is notified, by using a terminal reporting capability, of a value of a slot offset that can be supported by the terminal device, determine the slot offset of the CSI reference resource relative to the reporting moment based on one of the following processing manners:
when CSI reporting is periodic reporting or quasi-periodic reporting, obtaining, by using a subcarrier spacing during PUCCH or PUSCH reporting, the slot offset of the CSI reference resource relative to the reporting moment;
when CSI reporting is periodic reporting or quasi-periodic reporting, obtaining, by using a subcarrier spacing of a downlink measurement resource corresponding to the CSI reporting configuration information, the slot offset of the CSI reference resource relative to the reporting moment; and
when CSI reporting is periodic reporting or quasi-periodic reporting, obtaining, based on a smallest subcarrier spacing of resource configuration during PUCCH or PUSCH reporting and resource configuration during downlink measurement corresponding to the CSI reporting configuration information, the slot offset of the CSI reference resource relative to the reporting moment.

Specifically, a base station may be notified, by using a terminal reporting capability, of a value of nCQI_ref that can be supported by a user. A terminal obtains the value of nCQI_ref through table lookup according to any one of the foregoing Manner 1, Manner 2, and Manner 3.

Likewise, a processing manner for table lookup in this manner may also be replaced. Specific replacement processing is the same as that in Manner 1, and details are not described herein again.

Based on the descriptions of the foregoing solutions, for the determining a location of the CSI reference resource on a time domain based on at least the slot offset, that is, determining, by a terminal, the location of the CSI reference resource on the time domain according to a slot n (first uplink slot) and nCQI_ref at PUCCH reporting moment or PUSCH reporting moment, a plurality of processing scenarios in the following may also be included.

### Scenario 1 (not covered by the claimed invention):

The first processing unit 21 is configured to: subtract the slot offset from the first uplink slot at the PUCCH reporting moment or PUSCH reporting moment to obtain a second uplink slot, and use a first downlink slot corresponding to the second uplink slot as the location of the CSI reference resource on the time domain.

Specifically, when the slot offset is obtained by performing processing in the foregoing Manner 1, a slot at which nCQI_ref before the slot n (first uplink slot) is located, that is, n-nCQI_ref, is first obtained, and then a downlink slot corresponding to the uplink slot is obtained.

Further, an earliest first downlink slot is selected as the location of the CSI reference resource on the time domain when there are at least two first downlink slots corresponding to the first uplink slot. In other words, an earliest slot is selected as the time domain location of the CSI reference resource when there are a plurality of first downlink slots corresponding to the uplink slot.

Alternatively, an earliest valid first downlink slot is selected as the location of the CSI reference resource on the time domain when there are at least two first downlink slots corresponding to the first uplink slot. In other words, an earliest valid downlink slot is selected as the time domain location of the CSI reference resource when there are a plurality of such first downlink slots corresponding to the uplink slot.

Alternatively, a latest first downlink slot is selected as the location of the CSI reference resource on the time domain when there are at least two first downlink slots corresponding to the first uplink slot.

In other words, a latest slot is selected as the time domain location of the CSI reference resource when there are a plurality of such first downlink slots corresponding to the first uplink slot.

Alternatively, a latest valid first downlink slot is selected as the location of the CSI reference resource on the time domain when there are at least two first downlink slots corresponding to the first uplink slot.

In other words, a latest valid downlink slot is selected as the time domain location of the CSI reference resource when there are a plurality of such first downlink slots corresponding to the first uplink slot.

Alternatively, the location of the CSI reference resource on the time domain is determined based on the first uplink slot and the slot offset when there are at least two first downlink slots corresponding to the first uplink slot.

In other words, when there are a plurality of such first downlink slots corresponding to the first uplink slot, a calculation formula, the first uplink slot, and the slot offset may be preset, to calculate and obtain the location of the CSI reference resource on the time domain.

Alternatively, when there are at least two first downlink slots corresponding to the first uplink slot, a corresponding downlink slot is selected as a location of a CSI reference resource of at least two bandwidth parts BWP on the time domain based on at least one of the following manners:
selecting an earliest first downlink slot as the location of the CSI reference resource on the time domain;
selecting an earliest valid first downlink slot as the location of the CSI reference resource on the time domain;
selecting a latest first downlink slot as the location of the CSI reference resource on the time domain; and
selecting a latest valid first downlink slot as the location of the CSI reference resource on the time domain.

In other words, when there are a plurality of downlink slots corresponding to the uplink slot, a corresponding downlink slot is selected as the time domain location of the CSI reference resource respectively according to the four manners described above. It should be noted that at least one of the four manners described above may be used.

Scenario 2: The first processing unit 21 is configured to: determine a second downlink slot corresponding to a first uplink slot at PUCCH reporting moment or PUSCH reporting moment; and subtract the slot offset from the second downlink slot, and use an obtained third downlink slot as the location of the CSI reference resource on the time domain.

In other words, when the slot offset is obtained in the foregoing Manner 2, a downlink slot n' (second downlink slot) corresponding to the slot n (first uplink slot) is first obtained, and a slot at which nCQI_ref before the downlink slot n' (second downlink slot) is located, that is, n'-nCQI_ref, is selected as the time domain location of the CSI reference resource.

Further, a foremost second downlink slot is selected for calculating the third downlink slot when there are at least two second downlink slots corresponding to the first uplink slot.

In other words, a foremost downlink slot n' is selected for calculating the CSI reference resource when there are a plurality of downlink slots n' (second downlink slots) corresponding to the uplink slot n (first uplink slot).

Alternatively, a last second downlink slot is selected for calculating the third downlink slot when there are at least two second downlink slots corresponding to the first uplink slot.

In other words, a last downlink slot n' is selected for calculating the third downlink slot, to determine the CSI reference resource, when there are a plurality of downlink slots n' (second downlink slots) corresponding to the uplink slot n (first uplink slot).

Alternatively, the location of the CSI reference resource on the time domain is determined based on the first uplink slot and the slot offset when there are at least two second downlink slots corresponding to the first uplink slot. In other words, a preset calculation formula may be used to perform calculation when there are a plurality of second downlink slots corresponding to the first uplink slot.

### Scenario 3 (not covered by the claimed invention):

The first processing unit 21 is configured to: determine a subcarrier spacing corresponding to the slot offset to be a downlink subcarrier spacing or an uplink subcarrier spacing, and if the subcarrier spacing is a downlink subcarrier spacing, calculate the location of the CSI reference resource on the time domain based on one of the following manners:
determining the location of the CSI reference resource on the time domain based on the first uplink slot and the slot offset;
selecting an earliest first downlink slot as the location of the CSI reference resource on the time domain;
selecting an earliest valid first downlink slot as the location of the CSI reference resource on the time domain;
selecting a latest first downlink slot as the location of the CSI reference resource on the time domain; and
selecting a latest valid first downlink slot as the location of the CSI reference resource on the time domain.

In other words, when the slot offset is obtained through calculation based on the foregoing Manner 3, a subcarrier spacing corresponding to nCQI_ref is first determined to be a downlink subcarrier spacing or an uplink subcarrier spacing, and if the subcarrier spacing is a downlink subcarrier spacing, the time domain location of the CSI reference resource is calculated according to at least one of the several methods described above.

In addition, the first processing unit 21 is configured to: determine a subcarrier spacing corresponding to the slot offset to be a downlink subcarrier spacing or an uplink subcarrier spacing, and if the subcarrier spacing is an uplink subcarrier spacing, select an earliest first downlink slot as the location of the CSI reference resource on the time domain. In other words, if the subcarrier spacing corresponding to the slot offset is an uplink subcarrier spacing, the time domain location of the CSI reference resource is calculated according to the method in which the earliest first downlink slot is selected as the location of the CSI reference resource on the time domain.

Finally, the first processing unit 21 is configured to: calculate CSI according to a determined time domain location of the CSI reference resource, and perform reporting by using a PUCCH or PUSCH resource.

It can be learned that in the solution described above, a value of a slot offset of a CSI reference resource relative to a reporting moment can be obtained by using downlink measurement resource configuration and uplink reporting resource configuration that are included in CSI reporting configuration information, and further, a location of the CSI reference resource on a time domain is determined based on the slot offset. In this way, accuracy of calculation for CSI is ensured, and system processing efficiency is improved.

### Embodiment 11

This embodiment of the present invention provides a network device, including: a second communications unit, configured to send at least one piece of first information to a terminal device, where the first information carries at least CSI reporting configuration information, and the CSI reporting configuration information includes at least downlink measurement resource configuration and uplink reporting resource configuration.

Specifically, the CSI reporting configuration information further includes: CSI reporting being at least one of the following: periodic reporting, quasi-periodic reporting, and aperiodic reporting.

The downlink measurement resource configuration included in the CSI reporting configuration information includes: configuration of a measurement resource corresponding to CSI reporting.

The uplink reporting resource configuration included in the CSI reporting configuration information includes: PUCCH resource configuration during reporting and/or PUSCH resource configuration during reporting.

It should be noted that the PUCCH resource configuration may be a subcarrier spacing when reporting is performed by using a PUCCH; and the PUSCH resource configuration may be a subcarrier spacing when reporting is performed by using a PUSCH. Certainly, the PUCCH or PUSCH resource configuration may further include other parameters, but the parameters are not further exhaustively listed in this embodiment.

Correspondingly, on a terminal device side, a slot offset may be determined based on the downlink measurement resource configuration and the uplink reporting resource configuration that are included in the CSI reporting configuration information, and further, a location of a CSI reference resource on a time domain is determined based on at least the slot offset. That is, a terminal determines the location of the CSI reference resource on the time domain according to a slot n (first uplink slot) and nCQI_ref at PUCCH reporting moment or PUSCH reporting moment, calculates CSI according to a determined time domain location of the CSI reference resource, and performs reporting by using a PUCCH or PUSCH resource.

It can be learned that in the solution described above, the terminal device can be enabled to obtain a value of a slot offset of a CSI reference resource relative to a reporting moment by using downlink measurement resource configuration and uplink reporting resource configuration that are included in CSI reporting configuration information, and further determine a location of the CSI reference resource on a time domain based on the slot offset. In this way, accuracy of calculation for CSI is ensured, and system processing efficiency is improved.

A further, non-claimed example provides a hardware composition architecture of a terminal device or a network device. As shown in FIG. 3, the architecture includes: at least one processor 31, a memory 32, and at least one network interface 33. All the components are coupled together by using a bus system 34. It may be understood that, the bus system 34 is configured to implement connection and communication between the components. In addition to a data bus, the bus system 34 further includes a power supply bus, a control bus, and a status signal bus. However, for the purpose of clear description, all buses are marked as the bus system 34 in FIG. 3.

It may be understood that the memory 32 in the example may be a volatile memory or a nonvolatile memory, or may include a volatile memory and a nonvolatile memory.

In some implementations, the memory 32 stores the following elements: an executable module or a data structure, or a subset thereof, or an extended set thereof:
an operating system 321 and an application program 322.

The processor 31 is configured to be capable of processing steps of the method in the foregoing Embodiment 1 or 2, and details are not described herein again.

When the apparatuses described above in the embodiments of the present invention are implemented in a form of a software functional module and sold or used as independent products, the apparatuses may be alternatively stored in a computer-readable storage medium. Based on such an understanding, the technical solutions presented herein may be implemented in a form of a software product. The computer software product is stored in a storage medium and includes several instructions for instructing a computer device (which may be a personal computer, a server, a network device, or the like) to perform all or some of the methods described in the embodiments of the present invention. The foregoing storage medium includes: any medium that can store program code, such as a USB flash drive, a removable hard disk, a read-only memory (ROM), a magnetic disk, or a compact disc However, software products as described above, are not an embodiment of the present invention.

The scope of protection is defined by the appended claims.

## Claims

1. A method for determining a resource location, implemented by a terminal device, the method comprising:
determining, based on a first uplink slot where channel state information, CSI, reporting moment is located, a second downlink slot corresponding to the CSI reporting moment;
obtaining a slot offset of a location of a CSI reference resource on a time domain relative to the second downlink slot;
subtracting the slot offset from the second downlink slot to obtain a third downlink slot; and
determining the third downlink slot as the location of the CSI reference resource on the time domain;
wherein the second downlink slot is determined according to the following formula: $n ′ = \left⌊n∗\frac{{2}^{{μ}_{1}}}{{2}^{{μ}_{2}}}\right⌋$
where n' represents the second downlink slot, n represents the first uplink slot, *µ*₁ is a *µ* value corresponding to a subcarrier spacing of a measurement resource or another resource related to downlink measurement, and *µ*₂ is a *µ* value corresponding to a subcarrier spacing of reported physical uplink control channel, PUCCH, or physical uplink shared channel, PUSCH, resource;
wherein obtaining the slot offset comprises:
determining the slot offset based on downlink measurement resource configuration comprised in CSI reporting configuration information, wherein the downlink measurement resource configuration comprised in the CSI reporting configuration information comprises configuration of a measurement resource corresponding to CSI reporting, and wherein the CSI reporting configuration information further comprises CSI reporting being periodic reporting, or quasi-periodic reporting; and
wherein the method further comprises:
receiving first information; and
acquiring the CSI reporting configuration information based on the first information.

2. The method of claim 1, wherein determining the slot offset based on the downlink measurement resource configuration comprised in the CSI reporting configuration information comprises:
determining the slot offset based on a subcarrier spacing corresponding to the downlink measurement resource configuration comprised in the CSI reporting configuration information.

3. A method for determining a resource location, implemented by a network device, the method comprising:
sending first information to a terminal device;
wherein the first information carries at least channel state information, CSI, reporting configuration information, and the CSI reporting configuration information comprises downlink measurement resource configuration used for determining a slot offset of a location of a CSI reference resource on a time domain relative to a second downlink slot;
wherein the second downlink slot is determined according to the following formula: $n ′ = \left⌊n∗\frac{{2}^{{μ}_{1}}}{{2}^{{μ}_{2}}}\right⌋$
where n' represents the second downlink slot, n represents a first uplink slot, *µ*₁ is a *µ* value corresponding to a subcarrier spacing of a measurement resource or another resource related to downlink measurement, and *µ*₂ is a *µ* value corresponding to a subcarrier spacing of reported physical uplink control channel, PUCCH, or physical uplink shared channel, PUSCH, resource;
wherein the CSI reporting configuration information further comprises: CSI reporting being periodic reporting, or quasi-periodic reporting; and
wherein the downlink measurement resource configuration comprised in the CSI reporting configuration information comprises: configuration of a measurement resource corresponding to CSI reporting.

4. The method of claim 3, wherein the downlink measurement resource configuration comprised in the CSI reporting configuration information is used for determining the slot offset comprises:
a subcarrier spacing corresponding to the downlink measurement resource configuration comprised in the CSI reporting configuration information is used for determining the slot offset.

5. A terminal device, comprising:
a first processing unit, configured to:
determine, based on a first uplink slot where channel state information, CSI, reporting moment is located, a second downlink slot corresponding to the CSI reporting moment;
obtain a slot offset of a location of a CSI reference resource on a time domain relative to the second downlink slot;
subtract the slot offset from the second downlink slot to obtain a third downlink slot; and
determine the third downlink slot as the location of the CSI reference resource on the time domain;
wherein the second downlink slot is determined according to the following formula: $n ′ = \left⌊n∗\frac{{2}^{{μ}_{1}}}{{2}^{{μ}_{2}}}\right⌋$
where n' represents the second downlink slot, n represents the first uplink slot, *µ*₁ is a *µ* value corresponding to a subcarrier spacing of a measurement resource or another resource related to downlink measurement, and *µ*₂ is a *µ* value corresponding to a subcarrier spacing of reported physical uplink control channel, PUCCH, or physical uplink shared channel, PUSCH, resource;
wherein the first processing unit is configured to determine the slot offset based on downlink measurement resource configuration comprised in CSI reporting configuration information, wherein the downlink measurement resource configuration comprised in the CSI reporting configuration information comprises: configuration of a measurement resource corresponding to CSI reporting, and wherein the CSI reporting configuration information further comprises: CSI reporting being periodic reporting, or quasi-periodic reporting; and
wherein the terminal device further comprises:
a first communication unit, configured to receive first information; and
the first processing unit is configured to acquire the CSI reporting configuration information based on the first information.

6. The terminal device of claim 5, wherein the first processing unit is configured to determine the slot offset based on a subcarrier spacing corresponding to the downlink measurement resource configuration comprised in the CSI reporting configuration information.

7. A network device, comprising:
a second communication unit, configured to send first information to a terminal device;
wherein the first information carries at least channel state information, CSI, reporting configuration information, and the CSI reporting configuration information comprises downlink measurement resource configuration used for determining a slot offset of a location of a CSI reference resource on a time domain relative to a second downlink slot;
wherein the second downlink slot is determined according to the following formula: $n ′ = \left⌊n∗\frac{{2}^{{μ}_{1}}}{{2}^{{μ}_{2}}}\right⌋$
where n' represents the second downlink slot, n represents a first uplink slot, *µ*₁ is a *µ* value corresponding to a subcarrier spacing of a measurement resource or another resource related to downlink measurement, and *µ*₂ is a *µ* value corresponding to a subcarrier spacing of reported physical uplink control channel, PUCCH, or physical uplink shared channel, PUSCH, resource;
wherein the CSI reporting configuration information further comprises: CSI reporting being periodic reporting, or quasi-periodic reporting; and
wherein the downlink measurement resource configuration comprised in the CSI reporting configuration information comprises: configuration of a measurement resource corresponding to CSI reporting.

8. The network device of claim 7, wherein the downlink measurement resource configuration comprised in the CSI reporting configuration information is used for determining the slot offset comprises:
a subcarrier spacing corresponding to the downlink measurement resource configuration comprised in the CSI reporting configuration information is used for determining the slot offset.

## Patentansprüche

1. Verfahren zum Bestimmen einer Ressourcenposition, das durch eine Endgerätevorrichtung implementiert wird, wobei das Verfahren Folgendes umfasst:
Bestimmen, basierend auf einem ersten Uplink-Schlitz, in dem sich ein Kanalzustandsinformationsmeldezeitpunkt, CSI-Meldezeitpunkt, befindet, eines zweiten Downlink-Schlitzes, der dem CSI-Meldezeitpunkt entspricht;
Erhalten eines Schlitz-Offsets einer Position einer CSI-Referenzressource in einem Zeitbereich relativ zu dem zweiten Downlink-Schlitz;
Subtrahieren des Schlitz-Offsets von dem zweiten Downlink-Schlitz, um einen dritten Downlink-Schlitz zu erhalten; und
Bestimmen des dritten Downlink-Schlitzes als die Position der CSI-Referenzressource in dem Zeitbereich;
wobei der zweite Downlink-Schlitz gemäß der folgenden Formel bestimmt wird: $n ′ = \left⌊n∗\frac{{2}^{{μ}_{1}}}{{2}^{{μ}_{2}}}\right⌋$
wobei n' für den zweiten Downlink-Schlitz steht, n für den ersten Uplink-Schlitz steht, µ₁ ein µ-Wert ist, der einem Unterträgerabstand einer Messressource oder einer anderen Ressource mit Bezug auf die Downlink-Messung entspricht, und µ₂ ein µ-Wert ist, der einem Unterträgerabstand einer zur Meldung verwendeten Ressource eines Physical Uplink Control Channel, PUCCH, oder eines Physical Uplink Shared Channel, PUSCH, entspricht;
wobei das Erhalten des Schlitz-Offsets Folgendes umfasst: Bestimmen des Schlitz-Offsets basierend auf einer in CSI-Meldekonfigurationsinformationen enthaltenen Downlink-Messressourcenkonfiguration, wobei die in den CSI-Meldekonfigurationsinformationen enthaltene Downlink-Messressourcenkonfiguration eine Konfiguration einer einer CSI-Meldung entsprechenden Messressource umfasst und wobei die CSI-Meldekonfigurationsinformationen ferner eine CSI-Meldung, die eine periodische Meldung oder eine quasiperiodische Meldung ist, umfassen; und
wobei das Verfahren ferner Folgendes umfasst:
Empfangen erster Informationen; und
Erfassen der CSI-Meldekonfigurationsinformationen basierend auf den ersten Informationen.

2. Verfahren nach Anspruch 1, wobei das Bestimmen des Schlitz-Offsets basierend auf der in den CSI-Meldekonfigurationsinformationen enthaltenen Downlink-Messressourcenkonfiguration Folgendes umfasst:
Bestimmen des Schlitz-Offsets basierend auf einem Unterträgerabstand, der der in den CSI-Meldekonfigurationsinformationen enthaltenen Downlink-Messressourcenkonfiguration entspricht.

3. Verfahren zum Bestimmen einer Ressourcenposition, das durch eine Netzwerkvorrichtung implementiert wird, wobei das Verfahren Folgendes umfasst:
Senden erster Informationen an eine Endgerätevorrichtung;
wobei die ersten Informationen mindestens Kanalzustandsinformationsmeldekonfigurationsinformation en, CSI-Meldekonfigurationsinformationen, beinhalten und die CSI-Meldekonfigurationsinformationen eine zum Bestimmen eines Schlitz-Offsets einer Position einer CSI-Referenzressource in einem Zeitbereich relativ zu einem zweiten Downlink-Schlitz verwendete Downlink-Messressourcenkonfiguration umfassen;
wobei der zweite Downlink-Schlitz gemäß der folgenden Formel bestimmt wird: $n ′ = \left⌊n∗\frac{{2}^{{μ}_{1}}}{{2}^{{μ}_{2}}}\right⌋$
wobei n' für den zweiten Downlink-Schlitz steht, n für einen ersten Uplink-Schlitz steht, µ₁ ein µ-Wert ist, der einem Unterträgerabstand einer Messressource oder einer anderen Ressource mit Bezug auf die Downlink-Messung entspricht, und µ₂ ein µ-Wert ist, der einem Unterträgerabstand einer zur Meldung verwendeten Ressource eines Physical Uplink Control Channel, PUCCH, oder eines Physical Uplink Shared Channel, PUSCH, entspricht;
wobei die CSI-Meldekonfigurationsinformationen ferner Folgendes umfassen: eine CSI-Meldung, die eine periodische Meldung oder eine quasiperiodische Meldung ist; und
wobei die in den CSI-Meldekonfigurationsinformationen enthaltene Downlink-Messressourcenkonfiguration Folgendes umfasst: eine Konfiguration einer einer CSI-Meldung entsprechenden Messressource.

4. Verfahren nach Anspruch 3, wobei die in den CSI-Meldekonfigurationsinformationen enthaltene Downlink-Messressourcenkonfiguration, die zum Bestimmen des Schlitz-Offsets verwendet wird, Folgendes umfasst:
einen Unterträgerabstand, der der in den CSI-Meldekonfigurationsinformationen enthaltenen Downlink-Messressourcenkonfiguration, die zum Bestimmen des Schlitz-Offsets verwendet wird, entspricht.

5. Endgerätevorrichtung, die Folgendes umfasst:
eine erste Verarbeitungseinheit, die zu Folgendem konfiguriert ist:
Bestimmen, basierend auf einem ersten Uplink-Schlitz, in dem sich ein Kanalzustandsinformationsmeldezeitpunkt, CSI-Meldezeitpunkt, befindet, eines zweiten Downlink-Schlitzes, der dem CSI-Meldezeitpunkt entspricht;
Erhalten eines Schlitz-Offsets einer Position einer CSI-Referenzressource in einem Zeitbereich relativ zu dem zweiten Downlink-Schlitz;
Subtrahieren des Schlitz-Offsets von dem zweiten Downlink-Schlitz, um einen dritten Downlink-Schlitz zu erhalten; und
Bestimmen des dritten Downlink-Schlitzes als die Position der CSI-Referenzressource in dem Zeitbereich;
wobei der zweite Downlink-Schlitz gemäß der folgenden Formel bestimmt wird: $n ′ = \left⌊n∗\frac{{2}^{{μ}_{1}}}{{2}^{{μ}_{2}}}\right⌋$
wobei n' für den zweiten Downlink-Schlitz steht, n für den ersten Uplink-Schlitz steht, µ₁ ein µ-Wert ist, der einem Unterträgerabstand einer Messressource oder einer anderen Ressource mit Bezug auf die Downlink-Messung entspricht, und µ₂ ein µ-Wert ist, der einem Unterträgerabstand einer zur Meldung verwendeten Ressource eines Physical Uplink Control Channel, PUCCH, oder eines Physical Uplink Shared Channel, PUSCH, entspricht;
wobei die erste Verarbeitungseinheit dazu konfiguriert ist, den Schlitz-Offset basierend auf einer in CSI-Meldekonfigurationsinformationen enthaltenen Downlink-Messressourcenkonfiguration zu bestimmen, wobei die in den CSI-Meldekonfigurationsinformationen enthaltene Downlink-Messressourcenkonfiguration Folgendes umfasst: eine Konfiguration einer einer CSI-Meldung entsprechenden Messressource, und wobei die CSI-Meldekonfigurationsinformationen ferner Folgendes umfassen: eine CSI-Meldung, die eine periodische Meldung oder eine quasiperiodische Meldung ist; und
wobei die Endgerätevorrichtung ferner Folgendes umfasst:
eine erste Kommunikationseinheit, die dazu konfiguriert ist, erste Informationen zu empfangen; und
die erste Verarbeitungseinheit dazu konfiguriert ist, die CSI-Meldekonfigurationsinformationen basierend auf den ersten Informationen zu erfassen.

6. Endgerätevorrichtung nach Anspruch 5, wobei die erste Verarbeitungseinheit dazu konfiguriert ist, den Schlitz-Offset basierend auf einem Unterträgerabstand, der der in den CSI-Meldekonfigurationsinformationen enthaltenen Downlink-Messressourcenkonfiguration entspricht, zu bestimmen.

7. Netzwerkvorrichtung, die Folgendes umfasst:
eine zweite Kommunikationseinheit, die dazu konfiguriert ist, erste Informationen an eine Endgerätevorrichtung zu senden;
wobei die ersten Informationen mindestens Kanalzustandsinformationsmeldekonfigurationsinformation en, CSI-Meldekonfigurationsinformationen, beinhalten und die CSI-Meldekonfigurationsinformationen eine zum Bestimmen eines Schlitz-Offsets einer Position einer CSI-Referenzressource in einem Zeitbereich relativ zu einem zweiten Downlink-Schlitz verwendete Downlink-Messressourcenkonfiguration umfassen;
wobei der zweite Downlink-Schlitz gemäß der folgenden Formel bestimmt wird: $n ′ = \left⌊n∗\frac{{2}^{{μ}_{1}}}{{2}^{{μ}_{2}}}\right⌋$
wobei n' für den zweiten Downlink-Schlitz steht, n für einen ersten Uplink-Schlitz steht, µ₁ ein µ-Wert ist, der einem Unterträgerabstand einer Messressource oder einer anderen Ressource mit Bezug auf die Downlink-Messung entspricht, und µ₂ ein µ-Wert ist, der einem Unterträgerabstand einer zur Meldung verwendeten Ressource eines Physical Uplink Control Channel, PUCCH, oder eines Physical Uplink Shared Channel, PUSCH, entspricht;
wobei die CSI-Meldekonfigurationsinformationen ferner Folgendes umfassen: eine CSI-Meldung, die eine periodische Meldung oder eine quasiperiodische Meldung ist; und
wobei die in den CSI-Meldekonfigurationsinformationen enthaltene Downlink-Messressourcenkonfiguration Folgendes umfasst: eine Konfiguration einer einer CSI-Meldung entsprechenden Messressource.

8. Netzwerkvorrichtung nach Anspruch 7, wobei die in den CSI-Meldekonfigurationsinformationen enthaltene Downlink-Messressourcenkonfiguration, die zum Bestimmen des Schlitz-Offsets verwendet wird, Folgendes umfasst:
einen Unterträgerabstand, der der in den CSI-Meldekonfigurationsinformationen enthaltenen Downlink-Messressourcenkonfiguration, die zum Bestimmen des Schlitz-Offsets verwendet wird, entspricht.

## Revendications

1. Procédé de détermination d'un emplacement de ressource, mis en œuvre par un équipement terminal, le procédé comprenant les étapes suivantes :
déterminer, sur la base d'un premier créneau de liaison montante où se situe un moment de rapport d'informations d'état de canal, CSI, un deuxième créneau de liaison descendante correspondant au moment de rapport CSI ;
obtenir un décalage de créneau d'un emplacement d'une ressource de référence CSI sur un domaine temporel par rapport au deuxième créneau de liaison descendante ;
soustraire le décalage de créneau du deuxième créneau de liaison descendante pour obtenir un troisième créneau de liaison descendante ; et
déterminer le troisième créneau de liaison descendante comme étant l'emplacement de la ressource de référence CSI sur le domaine temporel ;
où le deuxième créneau de liaison descendante est déterminé selon la formule suivante : $n ′ = \left⌊n∗\frac{{2}^{{μ}_{1}}}{{2}^{{μ}_{2}}}\right⌋$
où n' représente le deuxième créneau de liaison descendante, n représente le premier créneau de liaison montante, µ₁ est une valeur de µ correspondant à un espacement de sous-porteuse d'une ressource de mesure ou d'une autre ressource liée à la mesure de liaison descendante, et µ₂ est une valeur de µ correspondant à un espacement entre les sous-porteuses de la ressource rapportée de canal de contrôle de liaison montante physique, PUCCH, ou de canal partagé de liaison montante physique, PUSCH ;
où l'obtention du décalage de créneau comprend les étapes suivantes :
déterminer le décalage de créneau sur la base d'une configuration de ressource de mesure de liaison descendante comprise dans les informations de configuration de rapport CSI, où la configuration de ressource de mesure de liaison descendante comprise dans les informations de configuration de rapport CSI comprend la configuration d'une ressource de mesure correspondant au rapport CSI, et où les informations de configuration de rapport CSI comprennent en outre un rapport CSI qui est un rapport périodique ou un rapport quasi-périodique ; et
le procédé comprenant en outre les étapes suivantes :
recevoir les premières informations ; et
acquérir les informations de configuration de rapport CSI sur la base des premières informations.

2. Procédé selon la revendication 1, dans lequel la détermination du décalage de créneau sur la base de la configuration de ressource de mesure de liaison descendante comprise dans les informations de configuration de rapport CSI comprend l'étape suivante : déterminer le décalage de créneau sur la base d'un espacement des sous-porteuses correspondant à la configuration de ressource de mesure de liaison descendante comprise dans les informations de configuration de rapport CSI.

3. Procédé de détermination d'un emplacement de ressource, mis en œuvre par un dispositif de réseau, le procédé comprenant les étapes suivantes :
envoyer des premières informations à un dispositif terminal ;
où les premières informations portent au moins des informations de configuration de rapport d'informations d'état de canal, CSI, et les informations de configuration de rapport CSI comprennent une configuration de ressource de mesure de liaison descendante utilisée pour déterminer un décalage de créneau d'un emplacement d'une ressource de référence CSI sur un domaine temporel par rapport à un deuxième créneau de liaison descendante ;
où le deuxième créneau de liaison descendante est déterminé selon la formule suivante : $n ′ = \left⌊n∗\frac{{2}^{{μ}_{1}}}{{2}^{{μ}_{2}}}\right⌋$
où n' représente le deuxième créneau de liaison descendante, n représente un premier créneau de liaison montante, µ₁ est une valeur de µ correspondant à un espacement de sous-porteuse d'une ressource de mesure ou d'une autre ressource liée à la mesure de liaison descendante, et µ₂ est une valeur de µ correspondant à un espacement entre les sous-porteuses de la ressource rapportée de canal de contrôle de liaison montante physique, PUCCH, ou de canal partagé de liaison montante physique, PUSCH ;
où les informations de configuration de rapport CSI comprennent en outre que : le rapport CSI est un rapport périodique ou quasi-périodique ; et
où la configuration de ressource de mesure de liaison descendante comprise dans les informations de configuration de rapport CSI comprend la configuration d'une ressource de mesure correspondant à un rapport CSI.

4. Procédé selon la revendication 3, dans lequel la configuration de ressource de mesure de liaison descendante comprise dans les informations de configuration de rapport CSI est utilisée pour déterminer le décalage de créneau et comprend que :
un espacement de sous-porteuses correspondant à la configuration de ressource de mesure de liaison descendante comprise dans les informations de configuration de rapport CSI est utilisé pour déterminer le décalage de créneau.

5. Dispositif terminal comprenant :
une première unité de traitement, configurée pour :
déterminer, sur la base d'un premier créneau de liaison montante où se situe un moment de rapport d'informations d'état de canal, CSI, un deuxième créneau de liaison descendante correspondant au moment de rapport CSI ;
obtenir un décalage de créneau d'un emplacement d'une ressource de référence CSI sur un domaine temporel par rapport au deuxième créneau de liaison descendante ;
soustraire le décalage de créneau du deuxième créneau de liaison descendante pour obtenir un troisième créneau de liaison descendante ; et
déterminer le troisième créneau de liaison descendante comme étant l'emplacement de la ressource de référence CSI sur le domaine temporel ;
où le deuxième créneau de liaison descendante est déterminé selon la formule suivante : $n ′ = \left⌊n∗\frac{{2}^{{μ}_{1}}}{{2}^{{μ}_{2}}}\right⌋$
où n' représente le deuxième créneau de liaison descendante, n représente le premier créneau de liaison montante, µ₁ est une valeur de µ correspondant à un espacement de sous-porteuse d'une ressource de mesure ou d'une autre ressource liée à la mesure de liaison descendante, et µ₂ est une valeur de µ correspondant à un espacement entre les sous-porteuses de la ressource rapportée de canal de contrôle de liaison montante physique, PUCCH, ou de canal partagé de liaison montante physique, PUSCH ;
où la première unité de traitement est configurée pour déterminer le décalage des créneaux sur la base d'une configuration de ressource de mesure de liaison descendante comprise dans les informations de configuration de rapport CSI, la configuration de ressource de mesure de liaison descendante comprise dans les informations de configuration de rapport CSI comprenant : la configuration d'une ressource de mesure correspondant à un rapport CSI, et où les informations de configuration de rapport CSI comprennent en outre que : le rapport CSI est un rapport périodique ou quasi-périodique ; et
où le dispositif terminal comprend en outre :
une première unité de communication, configurée pour recevoir des premières informations ; et
la première unité de traitement est configurée pour acquérir les informations de configuration de rapport CSI sur la base des premières informations.

6. Dispositif terminal selon la revendication 5, dans lequel la première unité de traitement est configurée pour déterminer le décalage de créneau sur la base d'un espacement des sous-porteuses correspondant à la configuration de ressource de mesure de liaison descendante comprise dans les informations de configuration de rapport CSI.

7. Dispositif de réseau comprenant :
une deuxième unité de communication, configurée pour envoyer des premières informations à un dispositif terminal ;
où les premières informations portent au moins des informations de configuration de rapport d'informations d'état de canal, CSI, et les informations de configuration de rapport CSI comprennent une configuration de ressource de mesure de liaison descendante utilisée pour déterminer un décalage de créneau d'un emplacement d'une ressource de référence CSI sur un domaine temporel par rapport à un deuxième créneau de liaison descendante ;
où le deuxième créneau de liaison descendante est déterminé selon la formule suivante : $n ′ = \left⌊n∗\frac{{2}^{{μ}_{1}}}{{2}^{{μ}_{2}}}\right⌋$
où n' représente le deuxième créneau de liaison descendante, n représente un premier créneau de liaison montante, µ₁ est une valeur de µ correspondant à un espacement de sous-porteuse d'une ressource de mesure ou d'une autre ressource liée à la mesure de liaison descendante, et µ₂ est une valeur de µ correspondant à un espacement entre les sous-porteuses de la ressource rapportée de canal de contrôle de liaison montante physique, PUCCH, ou de canal partagé de liaison montante physique, PUSCH ;
où les informations de configuration de rapport CSI comprennent en outre que : le rapport CSI est un rapport périodique ou quasi-périodique ; et
où la configuration de ressource de mesure de liaison descendante comprise dans les informations de configuration de rapport CSI comprend la configuration d'une ressource de mesure correspondant à un rapport CSI.

8. Dispositif de réseau selon la revendication 7, dans lequel la configuration de ressource de mesure de liaison descendante comprise dans les informations de configuration de rapport CSI est utilisée pour déterminer le décalage de créneau et comprend :
un espacement de sous-porteuses correspondant à la configuration de ressource de mesure de liaison descendante comprise dans les informations de configuration de rapport CSI est utilisé pour déterminer le décalage de créneau.
